# EUROPÄISCHE PATENTANMELDUNG

(11) **EP 1 057 694 A2**
(43) Veröffentlichungstag der Anmeldung: **06.12.2000**
(21) Anmeldenummer: 00110142.7
(22) Anmeldetag: 11.05.2000
(51) Int. Cl.: B60R 13/08

(54) **Akustische Kompaktisolation**

(30) Priorität: 04.06.1999 DE 19925661
(71) Anmelder: Volkswagen Aktiengesellschaft, 38436 Wolfsburg (DE)
(72) Erfinder: Müller, Reinhard, Dr., 38518 Gifhorn (DE); Dick, Michael, 86529 Schrobenhausen (DE)

(57) **Zusammenfassung**

Die Erfindung betrifft eine akustische Kompaktisolation zum Entdröhnen, insbesondere der Böden in Personenkraftfahrzeugen.

Dabei ist die Kompaktisolation so ausgebildet, daß unmittelbar in dieser Kompaktisolation Versorgungssysteme 5 eingeordnet werden können. Dies erfolgt in der Art und Weise, daß in der Schaumstoffschicht 2 der Kompaktisolation Ausformungen 11 vorgesehen sind, in denen die Versorgungssysteme 5 fest sowie auswechselbar und in schallentkoppelter Weise einordbar sind. Die Versorgungssysteme 5 können dabei als Kabelkanäle 16, als Luftkanäle 9, als Flachbandkabel 8 oder andere medienführende Kanäle 15 ausgebildet sind, wobei die Schaumstoffschicht 2 oberhalb mit einer Schwerschicht 1 und unterhalb mit einer Entdröhnschicht 4 versehen ist.

## Beschreibung

Die Erfindung betrifft eine akustische Kompaktisolation zum Entdröhnen, insbesondere der Böden in Personenkraftfahrzeugen.

Allgemein ist bekannt und wird auch praktiziert, das Entdröhnen der Böden in Kraftfahrzeugen durch einen aufgeklebten Entdröhnbelag, beispielsweise aus Bitumen oder durch aufgeschmolzene Kunststoffschichten zu erreichen. Diese Lösungen des allgemeinen Standes der Technik sind sehr aufwendig und deren Wirkungen doch sehr begrenzt. Ferner gibt es beim Recyceln von derartigen Entdröhnschichten bzw. bei der Wiederverwendung erhebliche Probleme, da diese aufgeklebten und aufgeschmolzenen Kunststoffschichten mit hohem Aufwand von dem beschichteten Blech zu entfernen sind.
Bekannt sind ferner sogenannte Einlegeböden, die sowohl im Boden eines Fahrzeuges integriert werden und aus einem Formstück bestehen, welches vorzugsweise aus einem Purschaum hergestellt ist, wobei diese Einlegeböden oder Einlegematten der jeweiligen Kontur des Fahrzeugbodens angepaßt sind, wodurch gleichfalls die im Boden eines Fahrzeuges vorhandenen und betriebsbedingten Erhebungen und Vertiefungen nicht ausgeglichen, sondern lediglich abgedeckt werden.

Mit diesem Problem befaßt sich die Lösung nach dem DE 297 09 742 U1, welches ein Auskleidungsteil für eine derartige Mulde in einem Kraftfahrzeug beschreibt. So wird ein Auskleidungsteil für eine derartige Mulde in einem Kraftfahrzeug vorgestellt, welches durch ein als Einlegeteil ausgebildetes Partikelschaumstoffteil gekennzeichnet ist, wobei in dem Partikelschaumstoffteil Wege ausgebildet sind, die eine Luftdurchströmung ermöglichen sollen. Dabei wird einmal die Porösität dieser Partikelschaumstoffteile genutzt, um gewisse Luftströmungen zu ermöglichen, andererseits wird zum Verschließen bzw. zum Ausgleichen einer derartigen Mulde im Boden eines Fahrzeuges ein Einlegeteil aus diesem Partikelschaumstoff vorgestellt, welches bestimmte Formkonturen aufweist, um sich den äußeren Bedingungen anzupassen und welches aus Einzelelementen besteht, die so bearbeitet sind, daß beim Fügen dieser Einzelteile sich Öffnungen ergeben, die als Luftkanäle ausgeformt sind und auch als Luftkanäle dienen.

Durch die Verwendung eines Partikelschaumstoffes soll einmal dessen Luftdurchlässigkeit genutzt werden, andererseits soll auch dessen leichte Bearbeitung genutzt werden, um entsprechende Einlegeelemente herstellen zu können, die dann, zueinander gefügt, die bereits beschriebenen Kanäle herausbilden.
Diese Methode ist sehr kosten- und zeitaufwendig, so daß derartige Einlegeteile kaum zur Anwendung gekommen sind.

Mit der Problematik des Entdröhnens von Böden in Kraftfahrzeugen befaßt sich die EP 0639 125 B 1, welche eine Dämpfungsmatte zum Entdröhnen für Fahrzeuge beschreibt, die aus einer Weichschicht mit geringem Strömungswiderstand und einem Dämpfungsfaktor von < 0,05 und einer mit dieser verbundenen Schwerschicht mit einer Dicke > ca. 4 mm besteht, die so gestaltet und ausgeführt ist, daß die Dämpfungsmatte ohne verbindende Kleb- oder Haftschicht auf den zu entdröhnenden Fahrzeugboden aufgelegt ist, deren Gesamtdicke geringer als 10 mm ist, wobei die Schwerschicht biegeweich mit einem niedrigen Elastizitätsmodul ausgeführt ist und somit diese Dämpfungsmatte aus zwei Schichten, der Weichschicht 2, die unmittelbar auf dem Fahrzeugboden zur Auflage kommt und der Schwerschicht 3, die über der Weichschicht angeordnet ist, besteht. Durch die Herausbildung der Dämpfungsmatte aus zwei Materialschichten unterschiedlicher Art und Dicke soll eine ausreichende Entdröhnung der Böden, insbesondere von Personenkraftfahrzeugen, erreicht werden.
Mit dieser Lösung wird sicher eine gewisse Entdröhnung des jeweiligen Fahrzeugbodens erreicht, jedoch ist durch deren sehr geringe Dicke keine Möglichkeit gegeben, in diese Dämpfungsmatte irgendwelche Versorgungsleitungen in Form von Kabelbäumen oder Luftkanälen und ähnlichen einzuarbeiten.

Es ist daher Aufgabe der vorliegenden Erfindung, eine akustische Kompaktisolation zum Entdröhnen von Böden, insbesondere von Böden in Personenkraftfahrzeugen zu entwickeln, welche so ausgeführt sind, daß eine ausreichende Dämpfung, eine ausreichende Entdröhnung, erreicht wird und gleichfalls gesichert ist, daß Versorgungsleitungen im Bodenbereich eines Personenkraftfahrzeuges verlegt bzw. integriert werden können.

Erfindungsgemäß wird die Aufgabe mit den Merkmalen des Anspruches 1 gelöst.

Die Unteransprüche geben vorteilhafte Ausgestaltungsmöglichkeiten hierzu an, mit denen zusätzliche Vorteile erzielt werden.

So wurde eine akustische Kompaktisolation geschaffen, bei deren Ausbildung und Gestaltung die allgemeine Erkenntnis des Zusammenhanges der Ausbildung der Schwerschichten und der Schaumstofflagen Berücksichtigung fand, somit das Feder-Masse-System, das Verhältnis der Massen der Schwerschichten und der Schaumstofflagen, durch die Einbindung der erforderlichen Versorgungssysteme in die akustische Kompaktisolation positiv beeinflußt wird, da die Masse bestimmt wird durch die einzusetzenden Versorgungssysteme und der Schwerschicht, während die Federwirkung durch die Verwendung und Ausbildung der Schaumstoffschicht beeinflußt wird. Somit ist die vorliegende Lösung im wesentlichen durch die Integration von Versorgungssystemen in die Schaumstoffschicht gekennzeichnet. Diese Integration/Einordnung erfolgt über Ausformungen in der Kompaktisolation in der Art und Weise, daß in diesen Ausformungen die für Kraftfahrzeuge notwendigen Versorgungssysteme eingeordnet werden. Dies können sowohl Kabelkanäle, Luftkanäle und andere medienführenden Kanäle sein, wobei weiter wesentlich dabei ist, daß die einzelnen Versorgungssysteme fest oder auswechselbar, aber jeweils in schallentkoppelter Weise, in dieser Kompaktisolation einordbar sind.
Die Ausformungen in der Kompaktisolation können dabei in verschiedenen Querschnittsformen ausgeführt werden und sowohl auf der Oberseite als auch auf der Unterseite einer derart ausgebildeten Kompaktisolation vorgesehen sein.
Je nach Verwendung des entsprechenden Schaumstoffmaterials und nach Ausbildung der Schaumstoffschicht ist es möglich, die Ausformungen direkt einzuarbeiten. Es besteht allerdings auch die Möglichkeit, die entsprechenden Versorgungssysteme beim Verlegen in die Kompaktisolation einzuordnen, indem über eine gewisse Druckanwendung die entsprechenden Systeme in die Schaumstoffschicht der Kompaktisolation eingedrückt werden. Vorgesehene Befestigungselemente, die entgegen den bekannten Lösungen nicht mit den Böden der Personenkraftwagen in Verbindung stehen, sichern die Lage der entsprechenden Versorgungssysteme. Diese Befestigungselemente können verschiedenartig ausgebildet sein, es können dies Schraub- oder Klemmbefestigungselemente sein, denkbar sind auch Klebestreifen oder Klettleisten, die entweder auf den einzelnen Versorgungssystemen aufgebracht oder in/an den Wandungen der Ausformungen vorgesehen sind.
Durch die besondere Ausbildung und Verwendung der Befestigungselemente, insbesondere dadurch, daß diese nicht mehr zu den Böden der Kraftfahrzeuge verbunden sind, ist eine kontaktfreie und somit schallentkoppelte Befestigung gegeben, wodurch gleichfalls Dröhngeräusche weitestgehend gesenkt bzw. vermieden werden.

Mit nachfolgendem Ausführungsbeispiel soll die Erfindung näher erläutert werden.

Die dazugehörige Zeichnung zeigt in
- Figur 1:: eine Schnittdarstellung der Kompaktisolation mit auf der Unterseite vorgesehenen Ausformungen
- Figur 2:: eine Schnittdarstellung der Kompaktisolation mit auf der Oberseite vorgesehen Ausformungen
- Figur 3:: die Einordnung eines Flachbandkabels in die Kompaktisolation in Schnittdarstellung
- Figur 4:: eine weitere Ausführungsform der Kompaktisolation in Schnittdarstellung.

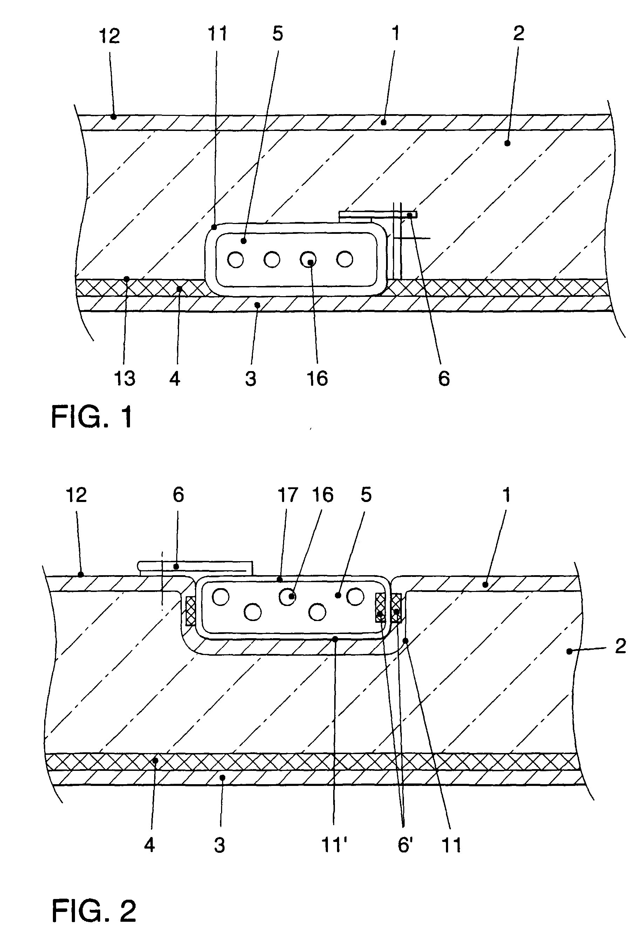

Die Ausbildung und Gestaltung einer akustischen Kompaktisolation sowie die Einbindung von Versorgungssystemen in diese Kompaktisolation ergibt sich in verschiedenen Ausführungsvarianten aus den Figuren 1 bis 4.
Gemäß der Figur 1 besteht die Kompaktisolation dabei aus der Schwerschicht 1, der Entdröhnschicht 4 und zwischen diesen beiden eingebetteten Schaumstoffschicht 2. Gezeigt ist ferner, wie die Versorgungssysteme 5 in den Ausformungen 11 eingeordnet sind und über Befestigungselemente 6 verspannt werden können.
Die Ausformungen 11 sind dabei auf der Unterseite 13 der Schaumstoffschicht 2 eingearbeitet, in die dann die Versorgungssysteme 5 Aufnahme finden. Bei der Darstellung nach Figur 1 bezieht sich das dargestellte Versorgungssystem 5 auf Kabelkanäle 16, in denen einzelne oder mehrere Kabel bzw. Kabelbäume verlegt werden können.
So ausgebildete Kompaktisolationen werden direkt mit der Entdröhnschicht 4 zu den Böden 3 gerichtet auf die Böden 3 von Kraftfahrzeugen aufgelegt, wobei die Verlegung dieser Kompaktisolationen sowohl auf flächigen Böden als auch in Mulden und Vertiefungen in den Böden 3 möglich ist.
Gegenüber den bekannten Lösungen sind die Befestigungselemente 6 nicht mehr mit den Böden 3 der Kraftfahrzeuge verbunden, so daß gegen den bisher verwendeten Stehbolzen, welche zu den Böden 3 befestigt waren, hier eine Trennung zwischen den Befestigungselementen 6 und den Böden 3 gegeben ist, somit Dröhngeräusche von den Böden 3 nicht mehr über die Befestigungselemente 6 weitergeleitet werden können, sich keine Schallbrücken mehr herausbilden, da die Befestigungselemente 6 schallentkoppelt in die Kompaktisolation eingeordnet sind.

Aus der Figur 2 ergibt sich eine weitere Ausführungsvariante der vorgestellten akustischen Kompaktisolation, bei der die Versorgungssysteme auf der Oberfläche 12 der Schwerschicht 1 eingeordnet sind, dies derart, daß die Schaumstoffschicht 2 gleichfalls mit Ausformungen 11 versehen wird, wobei bei dieser Ausführungsvariante die Schwerschicht 1 im Bereich der Ausformungen 11 analog gestaltet ist, so daß die Schwerschicht 1 der Kontur der Ausformungen 11 folgt und somit eine Ausformung 11' herausbildet, in der die gewünschten Versorgungssysteme 5 eingeordnet werden können.
Die Arretierung und Befestigung der so eingeordneten Versorgungssysteme 5 in die Ausformungen 11' erfolgt gleichfalls über Befestigungselemente 6, die die Versorgungssysteme 5 oberhalb umfassen und eine sichere Lagerung der eingeordneten Versorgungssysteme 5 gewährleisten.
Der Gesamtaufbau der Kompaktisolation ist dabei unverändert, auch bei dieser Ausführungsform besteht die Kompaktisolation aus der oberen Schwerschicht 1, der Entdröhnschicht 4 und der dazwischen eingeordneten Schaumstoffschicht 2.
Die Ausbildung und Einordnung der Ausformungen 11, 11' in die Kompaktisolation gemäß der Ausführungen nach den Figuren 1 und 2 ist sinnvollerweise immer dann zu wählen, wenn in diesen Ausformungen 11, 11' Versorgungssysteme 5 in Form von Kabelkanälen 16 eingeordnet werden, dabei können die in den Kabelkanälen 16 einzuordnenden Kabel einzeln oder auch als Kabelbäume verlegt werden.
Eine derartige Einordnung von einzelnen Kabeln oder auch einzelnen Kabelbäumen ist sinnvollerweise so auszuführen, daß die einzelnen Kabel oder auch Kabelbäume in einer zusätzlichen Hülle 17, ausgebildet als Schlauchhülle und aus einem Kunststoff hergestellt, eingebunden werden und dann in dieser kompakten Ausführung in den Ausformungen 11, 11' eingesetzt und zu diesen befestigt werden.
Die Befestigung kann dabei, wie in Figur 2 gleichfalls gezeigt, über Befestigungselemente 6, ausgebildet als Schraub- oder Klemmverbindungen, oder über Befestigungselemente 6', die als Klebestreifen oder Klettleisten ausgebildet sind.

Die technischen Weiterentwicklungen von Kraftfahrzeugen, insbesondere der Regel- und Steuergeräte, bedingen die Einordnung und Verlegung einer Vielzahl von elektrischen Kabeln, um die einzelnen Steuergeräte, genannt seien hier nur die Motorsteuergeräte, die Getriebesteuergeräte oder auch sogenannte Komfortsteuergeräte, elektrisch verbinden zu können. Für diese Zwecke verwendet man vorrangig Flachbandkabel 8, die im weitesten Sinne bereits standardisiert ausgeführt und somit bedarfsgerecht verwendet werden können.

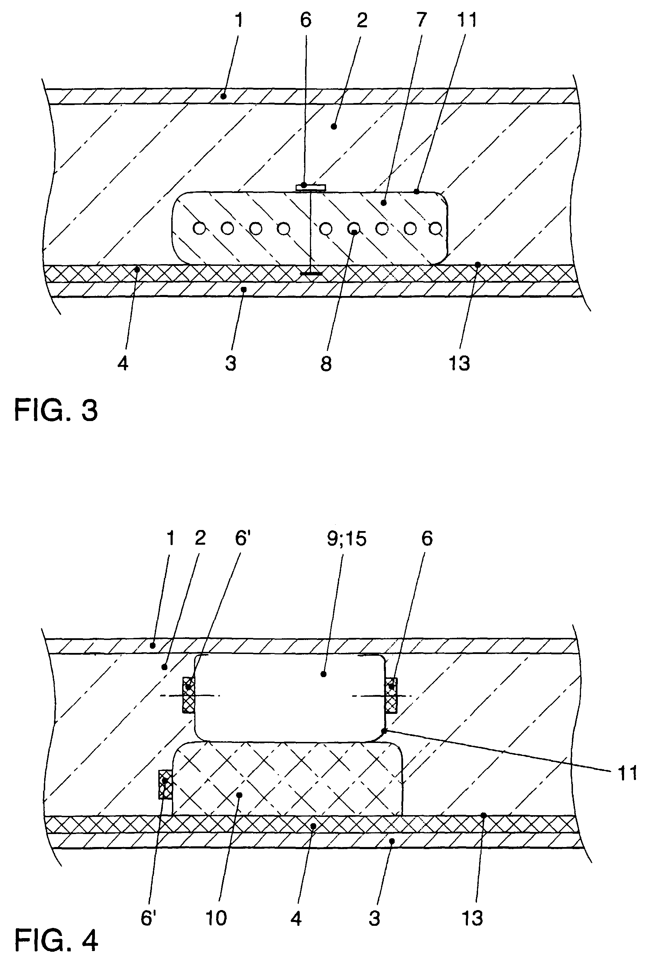

Bei der Verwendung von Flachbandkabel 8, wie in der Figur 3 gezeigt, ist es vorteilhaft, diese Flachbandkabel 8 in die vorbereiteten Ausformungen 11 der Kompaktisolation einzuordnen und dann in dieser Ausformung 11 einzuschäumen, so daß die Flachbandkabel 8 von einer Einschäumschicht 7 umgeben sind, somit eine sichere und gleichmäßige Lage der Flachbandkabel 8 gegeben ist, so daß auch bei einer flexiblen Verlegung der Kompaktisolation es zu keinen Abknickungen oder Zerstörungen einzelner Kabel des Flachbandkabelverbandes kommen kann.
Eine derartige Ausbildung der Einordnung von Flachbandkabel 8 in die Kompaktisolation bringt ferner den Vorteil mit sich, daß die Kompaktisolationen sektionsweise bzw. segmentweise vorgefertigt werden können und dann bei Bedarf, beim Einsatz in einem Kraftfahrzeug, zueinander gefügt werden. Um nun auch die elektrische Verbindung zwischen den einzelnen Flachbandkabeln 8 zu erreichen, bedarf es lediglich der Verwendung von Steckverbindungen, die die einzelnen Flachbandkabel 8 dann miteinander verbinden. Diese Verbindungen können über Steckbuchsen erfolgen, aber auch andere Verbindungsarten, beispielsweise Klemmverbindungen, sind gleichfalls denkbar.

Weitere Versorgungssysteme 5, ausgebildet als Luftkanäle 9 oder andere medienführende Kanäle 15 sind gemäß der Ausbildung der Kompaktisolation nach Figur 4 in dieses System einzuordnen, wobei diese Variante zu wählen ist, wenn die Versorgungssysteme 5 in sich geschlossene und selbsttragende Elemente sind, die in die Schaumstoffschicht 2 derart eingebettet werden, daß unterhalb der Kanäle 9, 15 Stützelemente 10 vorgesehen sind, die als Auflagerungen dienen und eine höhere spezifische Dichte gegenüber der Schaumstoffschicht 2 haben, so daß die Kanäle 9, 15 zur Auflagerung, nämlich zum Boden 3, lagegesichert positioniert werden können. Dabei erfolgt die Auflage der Kompaktisolation in bereits beschriebener Art und Weise, indem diese auf den jeweiligen Boden 3 eines Kraftfahrzeuges aufgelegt wird, wobei es hier vorteilhaft erscheint, vorhandene Mulden oder Vertiefungen in den Böden 3 zu nutzen, somit eine gewisse Bauraumreduzierung erreicht werden kann.
Als Material für die Stützelemente 10 handelt es sich im weitesten Sinne gleichfalls um einen Kunststoff, welcher lediglich höher verdichtet ist und somit eine höhere Druckfestigkeit besitzt.

Sowohl diese Stützelemente 10 als auch die Kanäle 9, 15 werden form- und kraftschlüssig in der Kompaktisolation eingelassen. Formschlüssig dadurch, daß die Ausformungen 11 in der Schaumschicht 2 dem jeweiligen Profil der Kanäle 9, 15 und der der Stützelemente 10 angepaßt sind, kraftschlüssig in der Form, daß auch bei dieser Ausführung Befestigungselemente 6 vorgesehen sind, die die Kanäle 9, 15 in ihrer Lage sichern, wobei die Befestigungselemente 6' als Klebestreifen oder Klettleisten ausgeführt sind, welche sowohl zu den Stützelementen 10 und den Kanälen 9, 15 als auch zu der Schaumstoffschicht 2 positioniert werden können.
Natürlich können die Befestigungselemente 6 auch als Schraub-, Klemm- oder Spannverbindungen ausgeführt werden. Da auch hier keine unmittelbare Verbindung der Verbindungselemente zu dem Boden 3 gegeben ist, sind die einzubringenden Systeme schallentkoppelt eingelagert, so daß störende Dröhngeräusche weitestgehend vermieden bzw. ausgeschlossen sind.

Neben der Ausbildung der Schaumstoffschicht 2 aus einem Schaumstoff, vorzugsweise einem Purschaumstoff, können auch Baumwoll-Faserfliese verwendet werden. Gleichfalls finden auch Flocken aus Kunststoff Anwendung, und schließlich sind auch Kombinationen aus Purschaum und Schaumstoffflocken möglich.

Wesentlicher Vorteil der neuen Lösung liegt darin, daß keine Körperschallübertragungen von außen in das Innere des Kraftfahrzeuges erfolgen, da eine ausreichende Entdröhnung zwischen dem Boden 3 von Kraftfahrzeugen und der daraufliegenden akustischen Kompaktisolation gegeben ist.

## Patentansprüche

1. Akustische Kompaktisolation zum Entdröhnen, insbesondere der Böden in Personenkraftfahrzeugen, bei der die Isolation aus Dämmatten, bestehend aus einer Schwerschicht, einer weiteren als Entdröhnschicht ausgebildeten Schwerschicht und einer zwischen beiden Schichten vorgesehenen Schaumstoffschicht, die auf den Böden auflegbar ist,
dadurch gekennzeichnet, daß
in der mittleren Schicht, der Schaumstoffschicht (2) Ausformungen (11) vorgesehen sind, in denen Versorgungssysteme (5) fest sowie auswechselbar und in schallentkoppelter Weise eingeordnet sind.

2. Akustische Kompaktisolation nach Anspruch 1,
dadurch gekennzeichnet, daß
die Ausformungen (11) in der Unterseite (13) der Schaumstoffschicht (2) vorgesehen sind und die darin einordbaren Versorgungssysteme (5) über Befestigungselemente (6) verspannt werden, wobei die Befestigungselemente (6) kontaktfrei und schallentkoppelt zu dem Boden (3) in der Kompaktisolation angeordnet sind.

3. Akustische Kompaktisolation nach einem der Ansprüche 1 bis 2,
dadurch gekennzeichnet, daß
die Befestigungselemente (6; 6') oberhalb oder seitlich der Ausformungen (11) angeordnet sind.

4. Akustische Kompaktisolation nach einem der Ansprüche 1 bis 3,
dadurch gekennzeichnet, daß
die Versorgungssysteme (5) als Kabelkanäle (16), Luftkanäle (9), Flachbandkabel (8) oder andere medienführende Kanäle (15) ausgebildet sind.

5. Akustische Kompaktisolation nach einem der Ansprüche 1 bis 4,
dadurch gekennzeichnet, daß
die Ausformungen (11) selbst als nutzbare Versorgungssysteme gestaltet sind und die Versorgungssysteme (5), als auch die in den Ausformungen (11) einordbaren Kabelkanäle (16), Luftkanäle (9), Flachbandkabel (8) und andere medienführende Kanäle (15) flächenhaft von der Schwerschicht (1) und der Entdröhnschicht (4) bedeckt sind.

6. Akustische Kompaktisolation nach einem der Ansprüche 1 bis 5,
dadurch gekennzeichnet, daß
in den Ausformungen (11) ein als Kabelbaum ausgebildetes Flachbandkabel (8) von einer Einschäumschicht (7) umhüllt, mit dieser fest oder auswechselbar in den Ausformungen (11) angeordnet ist.

7. Akustische Kompaktisolation nach einem der Ansprüche 1 bis 6,
dadurch gekennzeichnet, daß
die Luftkanäle (9) und die medienführenden Kanäle (15) als selbsttragende Elemente ausgebildet sind, denen innerhalb der Schaumstoffschicht (2) einsetzbare Stützelemente (10) zugeordnet sind.

8. Akustische Kompaktisolation nach einem der Ansprüche 1 bis 7,
dadurch gekennzeichnet, daß
die Schaumstoffschicht (2) aus verschiedenen Schäumen, vorzugsweise einem Pur-Schaumstoff, ausgebildet ist, wobei diese Schicht auch aus einem Baumwoll-Faserfliese herstellbar ist, auch können Schaumstoffflocken und Kombinationen verschiedener Schaumstoffe/Schaumstoffflocken zur Anwendung kommen.

9. Akustische Kompaktisolation nach einem der Ansprüche 1 bis 8,
dadurch gekennzeichnet, daß
die in den Ausformungen (11) einsetzbaren oder herausgebildeten Luftkanäle (9), Flachbandkabel (8), Kabelkanäle (16) und andere medienführende Kanäle (15) in der Schaumstoffschicht (2) formschlüssig als auch kraftschlüssig angeordnet sind.

10. Akustische Kompaktisolation nach einem der Ansprüche 1 bis 9,
dadurch gekennzeichnet, daß
die Befestigungselemente (6; 6') verschiedenartig, so als Schraub-, Klemm- oder Spannverbindungen, ausgebildet sind, aber auch Klebstreifen oder Klettleisten verwendet werden, die sowohl an den einzelnen in den Ausformungen (11) einzuordnenden Versorgungssystemen (5) als auch in den Ausformungen (11) selbst vorgesehen sind.

11. Akustische Kompaktisolation nach Anspruch 1,
dadurch gekennzeichnet, daß
die Ausformungen (11) in der Schaumstoffschicht (2) unmittelbar bei ihrer Herstellung oder späteren Verwendung eingearbeitet sind und/oder bei der Einordnung der Versorgungssysteme (5)in die Schaumstoffschicht (2) herausgebildet werden.
